Europäisches Patentamt

European Patent Office

Office européen des brevets

(19)

(11)  **EP 1 059 577 B1**

(12)  **EUROPEAN PATENT SPECIFICATION**

(45) Date of publication and mention
of the grant of the patent:
**06.11.2002   Bulletin 2002/45**

(51) Int Cl.⁷: **G05D 1/08**

(21) Application number: **00304373.4**

(22) Date of filing: **24.05.2000**

(54) **Time delay compensation for spacecraft motion compensation**

Ausgleich der Zeitverzögerung zum Bewegungsausgleich in einem Raumfahrzeug

Compensation de temps de retard dans une compensation de mouvement de satellite

(84) Designated Contracting States:
**DE FR GB IT**

(30) Priority: **09.06.1999  US 328805**

(43) Date of publication of application:
**13.12.2000   Bulletin 2000/50**

(73) Proprietor: **Space Systems / Loral, Inc.**
**Palo Alto, California 94303 (US)**

(72) Inventors:
 • **Mclaren, Mark**
   **Redwood City, California 94303 (US)**

 • **Chu, Peter Y.**
   **Palo Alto, California 94306 (US)**

(74) Representative: **Ertl, Nicholas Justin et al**
   **Elkington and Fife,**
   **Prospect House,**
   **8 Pembroke Road**
   **Sevenoaks, Kent TN13 1XR (GB)**

(56) References cited:
   **WO-A-98/16425          US-A- 4 687 161**
   **US-A- 5 517 418**

**EP 1 059 577 B1**

**Description**

Field of the Invention

The present invention relates generally to spacecraft motion compensation systems and methods, and more particularly, to spacecraft motion compensation systems and methods that eliminate systematic error introduced by the time delay required to calculate and apply the actual compensation to instruments disposed on the spacecraft.

Background to the Invention

The assignee of the present invention manufactures and deploys spacecraft that house electro-optical instruments that observe the Earth or other stellar bodies. The instruments are pointed by adjusting pointing mirrors using closed-loop servo systems. Unfortunately, motion of the pointing mirrors induces motion in the spacecraft. Furthermore, in conventional spacecraft motion compensation systems and methods, there is a time delay between the time the induced motion is sensed and the time that the compensating commands are applied to the instruments.
US Patent No. 4,687,161 entitled "Pointing Compensation System for Spacecraft Instruments" assigned to the assignee of the present invention discloses a system for reducing errors in pointing spacecraft instruments that are caused by spacecraft motion induced by motion of one or more of the instruments. This patent discloses a closed loop system wherein each instrument disposed on the spacecraft has command electronics for commanding motion in that instrument and a pointing control system for imparting motion in that instrument in response to commands provided by the command electronics. Spacecraft motion compensation logic compensates for instrument pointing errors caused by instrument-motion-induced spacecraft motion. Any finite number of instruments can be compensated, by providing each pointing control system and each command electronics with a link to the spacecraft motion compensation logic for the instruments that are to be compensated. The spacecraft motion compensation logic is an electronic manifestation of the algebraic negative of a model of the dynamics of motion of the spacecraft.
The system of US Patent No. 4,687,161 has the ability to reduce dynamic interaction among spacecraft instruments and simplify ground operations, thus enhancing overall system performance. However, this compensation scheme suffers from a time delay that is required to calculate and apply the actual compensation. It would be desirable to eliminate systematic error introduced by this time delay.
Accordingly, it is an objective of the present invention to provide for improved systems and methods that implement spacecraft motion compensation that are a function of the motion of instruments disposed on the spacecraft. It is a further objective of the present invention to eliminate the compensation errors in a spacecraft motion compensation system due to known time delays in the compensation for known disturbances.
US 5,517,418 discloses a feedforward control system for compensating for predictable disturbances exerted on a spacecraft, for example thermal shock disturbances. The system provides control signals for actuators for controlling the spacecraft dynamics.

Summary of the Invention

According to a first aspect of the present invention, a system for correcting the pointing error of an instrument carried by a spacecraft comprises:

an instrument command logic circuit (11) that generates slew commands that control pointing of the instrument;
a pointing control system (14) coupled to the instrument command logic circuit (11) for pointing the instrument in response to the slew commands; and
a spacecraft motion compensation logic circuit (12) for processing the slew commands from the instrument command logic circuit (11),

wherein the compensation logic circuit (12) is responsive to a signal that is indicative of the time at which a disturbance is to occur that will cause motion that requires compensation, and outputs a compensation signal to the pointing control system (14) substantially at the time at which the disturbance occurs to compensate for the disturbance.
According to a second aspect of the present invention, a spacecraft motion compensation method for correcting the pointing error of an instrument carried by a spacecraft, comprises the steps of:

determining the time at which a disturbance is to occur in the future that will cause motion that requires compensation;
computing compensation signals comprising slew commands that control pointing of the instrument and that will compensate for the disturbance; and

applying the compensation signals to the instrument substantially at the time of the occurrence of the disturbance causing the motion that requires compensation.

The present invention eliminates the systematic error introduced by the time delay that is required to calculate and apply the actual compensation in conventional systems. In accordance with the present invention, the compensation signal is applied at the same time as the occurrence of the disturbance causing the motion that requires compensation.

An exemplary method comprises the following steps. The time at which a disturbance is to occur in the future that will cause motion that requires compensation is determined. Compensation signals that will compensate for the disturbance are then computed. The compensation signals are applied to the instrument substantially at the time of the occurrence of the disturbance causing the motion that requires compensation.

Undesirable motion of any spacecraft sub-system caused by deterministic disturbances are compensated by calculating and removing the disturbance from the sub-system response. If the time of the impending disturbance is known, or if the disturbing event itself can be delayed, compensation electronics of the present invention calculates the compensation signal prior to the disturbing event. Therefore, the compensation is applied at the same time and/or during the same computer clock cycle as the disturbance. This eliminates introduction of artificial time delays into the compensation due to the time required to compute the compensation, known physical time delays in the actuators, and the digital nature of the control logic.

Brief Description of the Drawings

An example of the present invention will now be described in detail with reference to the accompanying drawings, in which:

Fig. 1 illustrates an exemplary spacecraft motion compensation system in accordance with the principles of the present invention; and,

Fig. 2 is a flow chart that illustrates an exemplary spacecraft motion compensation method in accordance with the principles of the present invention.

**Detailed Description**

The present invention has utility on any type of spacecraft and for any finite number of instruments disposed thereon, such as cameras, antennas, or solar panels, that need to be precisely pointed, and will be illustrated with respect to a typical spacecraft manufactured by the assignee of the present invention. The spacecraft may be a GOES I/J/K meteorological satellite, for example. This satellite includes a solar array, an x-ray sensor, a magnetometer, an S-band transmit antenna, a search and rescue antenna, a UHF antenna, a telemetry and command antenna, earth sensors, an S-band receive antenna, a solar sail, an imager, and a sounder. The imager comprises a cooler, an aperture, and a pointing mirror. The sounder comprises a cooler, an aperture, and a pointing mirror.

The pointing mirrors are each mounted on a two-axis gimbal which selectively positions the mirror with respect to orthogonal x and y axes at a scan rate of many successive positions per second. The x axis is referred to as the roll, north/south, or elevation axis. The y axis is referred to as the pitch, east/west, or azimuth axis.

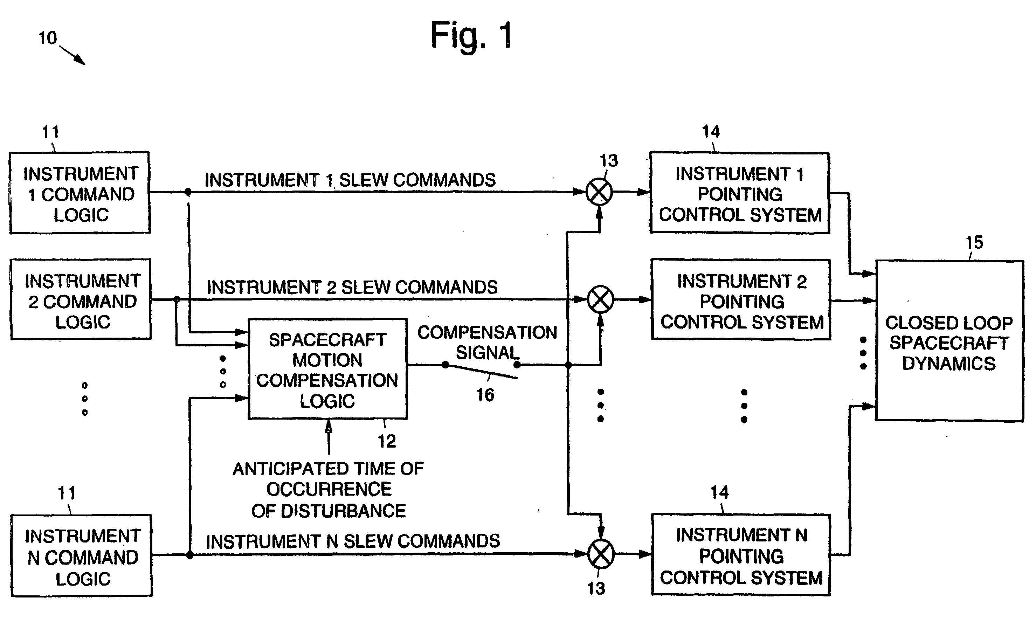

Referring now to the drawing figures, Fig. 1 illustrates an exemplary spacecraft motion compensation system 10 in accordance with the principles of the present invention. The system 10 may be advantageously used with the above-described or similar satellite, for example. Undesirable motion of any spacecraft sub-system (including the antenna, solar sail, imager, or sounder) caused by deterministic disturbances are compensated by calculating and removing the disturbance from the sub-system response.

As is shown in Fig. 1, each of N instruments for which pointing compensation is desired comprises a command logic circuit 11, which is typically an electronics package that controls pointing of the respective instrument using slew commands. Each instrument comprises a pointing control system 14 for imparting pointing motion to the instrument. A spacecraft motion compensation logic circuit 12 normally operates continuously, and receives the slew commands as inputs from the instrument command logic circuit 11 of each instrument, and outputs a compensation signal to each of the pointing control systems 14 by way of a plurality of summing devices 13. The compensation signal can be interrupted at will by means of opening an override switch 16 upon command from the ground received by way of the telemetry system on-board the spacecraft.

The spacecraft motion compensation logic circuit 12 may be implemented in analog or digital form. For the example illustrated, the compensation logic circuit 12 is implemented as part of an onboard attitude and orbital control electronics digital microprocessor, such as a miniaturized version of a Perkin Elmer/Interdata 5/16 minicomputer.

The spacecraft motion compensation logic circuit 12 comprises the algebraic negative of a model of the dynamics of motion of the spacecraft. Thus, the compensation signal commands the instruments to do the opposite of what the spacecraft is expected to do in response to the slew commands. The compensation signal is input into the instruments by way of their respective pointing control systems 14. Since the system is closed loop, closed loop spacecraft dynamics 15 cause the spacecraft to move as a result of slewing the instruments, while pointing of each of the instruments is compensated for.

A major source of pointing disturbances to the imager, for example, is the slewing motion of the sounder pointing mirror during operation of the imager. The slewing motion of the sounder pointing mirror has been found to introduce significant errors. The motion compensation system 10, using estimated spacecraft dynamics and controls, compensates for these motions so that their effects are minimized or substantially eliminated. The marked improvement provide by the present system 10 is that it substantially eliminates systematic errors introduced by the time delay normally required to calculate and apply the actual compensation in conventional systems. In the present system 10, the compensation signal is applied at substantially the same time as the occurrence of the disturbance causing the motion that requires compensation (or during the same clock cycle). The key to this is that the time of the occurrence of the disturbance causing the motion that requires compensation is known, and the desired compensation signal is precomputed and applied at the appropriate time. In particular, the compensation signal is applied at the same time as the occurrence of the disturbance causing the motion that requires compensation.

Consider, for example, the response of the imager, the sounder, and the spacecraft to slewing of the sounder pointing mirror. Slewing of the sounder pointing mirror starts with a command generated in the sounder slew command logic circuit 11 that is sent to sounder mirror servo dynamics. The command conveys the desired mirror angles about its x and y axes, with respect to arbitrary reference angles. A mirror control loop tracks the command accurately, the momentum of the pointing mirror is exchanged with the spacecraft and can cause as much as a 50 microradian transient spacecraft disturbance which results in a like pointing error induced in the imager.

To compensate for this disturbance to the imager pointing mirror, the compensation logic circuit 12 processes the slew command from the sounder, anticipates the resulting platform motion, and sends a compensation signal to the imager mirror servo dynamics by way of the summing device 13. Since the compensation signal is equal in magnitude and reversed in polarity to that representing the anticipated disturbance, the pointing mirror of the imager moves to cancel the spacecraft disturbance.

The above example is intended to illustrate one typical application of the principles of the present invention. Reference is again made to US Patent No. 4,687,161, the contents of which are incorporated herein by reference in its entirety, which discusses other applications and examples in which the present invention may be used. Additional examples of types of disturbances that may be compensated and details of the spacecraft and its operation as it relates to the compensation provided by the present invention may be derived from reading this patent.

A typical example involves compensation implemented using a GOES I type mirror motion compensation system for providing rigid-body motion compensation of instrument slewing motions. This system is disclosed in US Patent No. 4,687,161. In accordance with the present invention, commands to slew an instrument are delayed until the compensation for other instruments has been calculated, and then the respective slew and compensation commands are applied to all instruments at the same time as the disturbance.

The model used for spacecraft motion compensation logic circuit 12 is given by the following equations. The compensation signal has x and y axis components, $C_x(s)$ and $C_y(s)$, respectively. This same compensation signal is sent to each of the pointing control systems 14. The equations are the algebraic negatives of the linear transfer functions of the spacecraft to disturbance torques produced by x and y axis motions of the instrument servos.

The transfer functions are linear functions of inertias and angles, and their accuracy depends only on the tolerances in the knowledge of the rigid-body mass properties of the spacecraft and instrument servos. Propellant slosh has relatively little effect on satellite motion at the very low satellite accelerations produced by the servos. Similarly, structural flexibility effects at very small amplitudes of motion do not produce measurable disturbances to spacecraft motion. Because the mirrors have little mass compared with the spacecraft, and their servos are fast and track the input slew commands with little error, the dynamics of the servos do not have to be taken into account in these compensation equations.

The spacecraft motion compensation logic circuit 12 is implemented as a time domain realization of the following transfer functions:

$$C_x(s) = \frac{-1/I_x\left(I_{Ix}s^2 A_{Ix}(s) + I_{Sx}s^2 A_{Sx}(s)(s+1/G)\right)}{s^4 + s^3/G + J^2 s^2 + s(H-KL)J^2/HG + KJ^2/HG}$$

$$C_y(s) = \frac{-1/I_y\left(I_{Iy}s^2 A_{Iy}(s) + I_{Sy}s^2 A_{Sy}(s)\right)\left(s^2 + 2PQs + Q^2\right)}{s^4 + 2PQs^3 + Q^2 s^2 + Rs + 1}$$

where:

s is the Laplace operator (differentiator),
$C_x(s)$ is the compensation angle for the x axis component of compensation signal sent to each of the servos,
$I_x$ is the moment of inertia of the satellite about its roll axis,
$I_{Ix}$ is the moment of inertia of imager mirror about its x axis,
$I_{Sx}$ is the moment of inertia of sounder mirror about its x axis,
$A_{Ix}(s)$ is the angular position of imager mirror about its x axis, with respect to an arbitrary reference angle,
$A_{Sx}(s)$ is the angular position of sounder mirror about its x axis, with respect to an arbitrary reference angle,
H is the total angular momentum of the satellite,
G, J, K, and L are constants that realize the closed-loop response of the satellite's roll and yaw attitude control loop,
$C_y(s)$ is the compensation angle for the y axis component of compensation signal 6 sent to each of the servos,
$I_{Iy}$ is the moment of inertia of the satellite about its pitch axis,
$I_{Sy}$ is the moment of inertia of imager mirror about its y axis,
$I_{Iy}$ is the moment of inertia of sounder mirror about its y axis,
$A_{Iy}(s)$ is the angular position of imager mirror about its y axis, with respect to an arbitrary reference angle,
$A_{Sy}(s)$ is the angular position of sounder mirror about its y axis, with respect to an arbitrary reference angle, and
P, Q, and R are constants that realize the closed-loop response of the satellite's pitch attitude control loop.

In the general case, where more than two instruments are compensated, numerators of the equations for $C_x$(s) and $C_y$(s) are supplemented with terms representing disturbance torques emanating from the additional instruments.

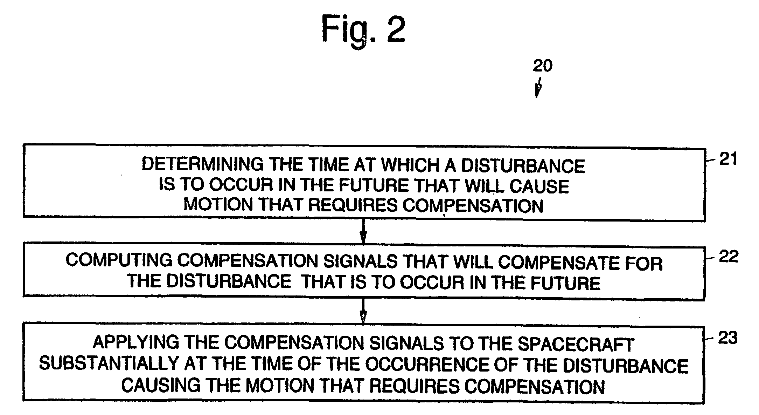

Fig. 2 is a flow chart that illustrates an exemplary spacecraft motion compensation method 20 in accordance with the principles of the present invention. The exemplary method 20 comprises the following steps. The time at which a disturbance is to occur in the future that will cause motion that requires compensation is determined 21. Compensation signals that will compensate for the disturbance are then computed 22. The compensation signals are then applied 23 to the instrument substantially at the time of the occurrence of the disturbance causing the motion that requires compensation.

Thus, undesirable motion of any spacecraft sub-system caused by deterministic disturbances are compensated using the principles of the present invention by calculating and removing the disturbance from the sub-system response. In using the present system 10 and method 20, the time of the impending disturbance is known, or the disturbing event is delayed to a known time. The present compensation system 10 and method 20 calculate the compensation signal prior to the disturbing event. Thus, the compensation signal can be applied at the same time and/or during the same computer clock cycle as the disturbance. This eliminates the introduction of time delays to the compensation due to the time required to compute the compensation signal, the known physical time delay in the actuators, and the digital nature of the control logic.

## Claims

1. A system for correcting the pointing error of an instrument carried by a spacecraft comprising:

   an instrument command logic circuit (11) that generates slew commands that control pointing of the instrument;
   a pointing control system (14) coupled to the instrument command logic circuit (11) for pointing the instrument in response to the slew commands; and
   a spacecraft motion compensation logic circuit (12) for processing the slew commands from the instrument command logic circuit (11),

   **characterised in that** the compensation logic circuit (12) is responsive to a signal that is indicative of the time at which a disturbance is to occur that will cause motion that requires compensation, and outputs a compensation signal to the pointing control system (14) substantially at the time at which the disturbance occurs to compensate for the disturbance.

2. A system according to claim 1, wherein the spacecraft comprises a plurality of instruments, and wherein the system comprises:

a plurality of instrument command logic circuits (11) respectively coupled to the plurality of instruments that respectively control pointing of each instrument using slew commands; and
a plurality of pointing control systems (14) respectively coupled to the plurality of instruments for pointing the instrument,

wherein the spacecraft motion compensation logic circuit (12) processes the slew commands from the instrument command logic circuits (11), and outputs a plurality of compensation signals to the plurality of pointing control systems (14) substantially at the time at which the disturbance occurs to compensate for the disturbance.

3. A system according to claim 2, wherein the compensation signals are summed with the slew commands from the plurality of instrument command logic circuits (11) to produce the compensation signals that are applied to the plurality of pointing control systems (14).

4. A system according to any preceding claim, wherein the or each compensation signal is summed with the slew commands from the instrument command logic circuit (11) to produce the compensation signal that is applied to the pointing control system (14).

5. A system according to any preceding claim, wherein the or each compensation signal is applied during the same clock cycle as the disturbance.

6. A spacecraft motion compensation method for correcting the pointing error of an instrument carried by a spacecraft, **characterised in that** the method comprises the steps of:

determining the time at which a disturbance is to occur in the future that will cause motion that requires compensation;
computing compensation signals comprising slew commands that control pointing of the instrument and that will compensate for the disturbance; and
applying the compensation signals to the instrument substantially at the time of the occurrence of the disturbance causing the motion that requires compensation.

7. A method according to claim 6 wherein the compensation signals are applied during the same clock cycle as the disturbance.

## Patentansprüche

1. System zum Korrigieren des Ausrichtfehlers eines Instruments, das von einem Raumfahrzeug getragen wird, umfassend:

eine Instrumentenbefehlslogikschaltung (11), die Schwenkbefehle erzeugt, die das Ausrichten des Instruments steuern;
ein Ausrichtsteuerungssystem (14) gekoppelt mit der Instrumentenbefehlslogikschaltung (11) zum Ausrichten des Instruments in Reaktion auf die Schwenkbefehle; und
eine Raumfahrzeugbewegungsausgleichslogikschaltung (12) zum Verarbeiten der Schwenkbefehle von der Instrumentenbefehlslogikschaltung (11),

**dadurch gekennzeichnet, dass** die Ausgleichslogikschaltung (12) auf ein Signal anspricht, das den Zeitpunkt angibt, zu dem eine Störung auftreten wird, die Bewegung auslösen wird, die Ausgleich erfordert, und ein Ausgleichssignal an das Ausrichtsteuerungssystem (14) im Wesentlichen zu dem Zeitpunkt ausgibt, zu dem die Störung auftritt, um die Störung auszugleichen.

2. System nach Anspruch 1, worin das Raumfahrzeug eine Vielzahl von Instrumenten umfasst und worin das System umfasst:

eine Vielzahl von Instrumentenbefehlslogikschaltungen (11), die entsprechend mit der Vielzahl von Instrumenten gekoppelt sind, die entsprechend das Ausrichten jedes Instruments unter Verwendung von Schwenkbefehlen steuern; und

eine Vielzahl von Ausrichtsteuerungssystemen (14), die entsprechend mit der Vielzahl von Instrumenten gekoppelt sind, zum Ausrichten des Instruments,

worin die Raumfahrzeugbewegungsausgleichslogikschaltung (12) die Schwenkbefehle von den Instrumentenbefehlslogikschaltungen (11) verarbeitet und eine Vielzahl von Ausgleichssignalen an die Vielzahl von Ausrichtsteuerungssystemen (14) im Wesentlichen zu dem Zeitpunkt ausgibt, zu dem die Störung auftritt, um die Störung auszugleichen.

**3.** System nach Anspruch 2, worin die Ausgleichssignale mit den Schwenkbefehlen von der Vielzahl von Instrumentenbefehlslogikschaltungen (11) aufsummiert werden, um die Ausgleichssignale zu produzieren, die auf die Vielzahl von Ausrichtsteuerungssystemen (14) aufgebracht werden.

**4.** System nach einem der vorhergehenden Ansprüche, worin das oder jedes Ausgleichssignal mit den Schwenkbefehlen von der Instrumentenbefehlslogikschaltung (11) aufsummiert werden, um das Ausgleichssignal zu produzieren, das auf das Ausrichtsteuerungssystem (14) aufgebracht wird.

**5.** System nach einem der vorhergehenden Ansprüche, worin das oder jedes Ausgleichssignal im selben Taktzyklus aufgebracht wird wie die Störung.

**6.** Verfahren zum Bewegungsausgleich in Raumfahrzeugen zum Korrigieren des Ausrichtfehlers eines Instruments, das von einem Raumfahrzeug getragen wird, **dadurch gekennzeichnet, dass** das Verfahren die Schritte umfasst:

Bestimmen des Zeitpunkts, zu dem eine Störung in der Zukunft auftreten wird, die Bewegung auslöst, die Ausgleich erfordert;
Berechnen von Ausgleichssignalen umfassend Schwenkbefehle, die das Ausrichten des Instruments steuern und die die Störung ausgleichen; und
Aufbringen der Ausgleichssignale auf das Instrument im Wesentlichen zum Zeitpunkt des Auftretens der Störung, die die Bewegung auslöst, die Ausgleich erfordert.

**7.** Verfahren nach Anspruch 6, worin die Ausgleichssignale während desselben Taktzyklus aufgebracht werden wie die Störung.

**Revendications**

**1.** Système pour corriger l'erreur de pointage d'un instrument porté par un véhicule spatial comprenant :

un circuit logique (11) de commande de l'instrument qui génère des commandes de pivotement qui commandent le pointage de l'instrument ;
un système (14) de commande du pointage qui est couplé avec le circuit logique (11) de commande de l'instrument pour pointer l'instrument en réponse aux commandes de pivotement ; et
un circuit logique (12) de compensation du mouvement du véhicule spatial pour traiter les commandes de pivotement provenant du circuit logique (11) de commande de l'instrument ;

**caractérisé en ce que** le circuit logique (12) de compensation répond à un signal qui est significatif du moment auquel il va se produire une perturbation qui va créer un mouvement qui nécessite une compensation et qui fournit, en sortie, un signal de compensation au système (14) de commande du pointage sensiblement au moment auquel la perturbation se produit pour compenser la perturbation.

**2.** Système selon la revendication 1, **caractérisé en ce que** le véhicule spatial comprend une pluralité d'instruments, **en ce que** le système comprend :

une pluralité de circuits logiques (11) de commande de l'instrument qui sont couplés respectivement à la pluralité d'instruments et qui commandent respectivement le pointage de chaque instrument en utilisant des commandes de pivotement ; et
une pluralité de systèmes (14) de commande du pointage qui sont couplés respectivement à la pluralité d'instruments pour le pointage de l'instrument,

**en ce que** le circuit logique (12) de compensation du mouvement du véhicule spatial traite les commandes de pivotement provenant des circuits logiques (11) de commande de l'instrument et fournit, en sortie, une pluralité de signaux de compensation à la pluralité de systèmes (14) de commande du pointage sensiblement au moment auquel la perturbation se produit pour compenser la perturbation.

3. Système selon la revendication 2, **caractérisé en ce que** les signaux de compensation sont additionnés avec les commandes de pivotement provenant de la pluralité de circuits logiques (11) de commande de l'instrument pour produire les signaux de compensation qui sont appliqués à la pluralité de systèmes (14) de commande du pointage.

4. Système selon l'une quelconque des revendications précédentes, **caractérisé en ce que** le ou chaque signal de compensation est additionné avec les commandes de pivotement provenant du circuit logique (11) de commande de l'instrument pour produire le signal de compensation qui est appliqués au système (14) de commande du pointage.

5. Système selon l'une quelconque des revendications précédentes, **caractérisé en ce que** le ou chaque signal de compensation est appliqué pendant le même cycle d'horloge que la perturbation.

6. Procédé de compensation du mouvement d'un véhicule spatial pour corriger l'erreur de pointage d'un instrument porté par un véhicule spatial, **caractérisé en ce que** le procédé comprend les étapes suivantes :

déterminer le moment auquel il va se produire, dans le futur, une perturbation qui va causer un mouvement qui nécessite une compensation ;
calculer des signaux de compensation qui comprennent des commandes de pivotement qui commandent le pointage de l'instrument et qui vont compenser la perturbation ; et
appliquer les signaux de compensation à l'instrument sensiblement au moment de la survenance de la perturbation qui cause le mouvement qui nécessite une compensation.

7. Procédé selon la revendication 6, **caractérisé en ce que** les signaux de compensation sont appliqués pendant le même cycle d'horloge que la perturbation.

Fig. 1

# Fig. 2

20

| DETERMINING THE TIME AT WHICH A DISTURBANCE IS TO OCCUR IN THE FUTURE THAT WILL CAUSE MOTION THAT REQUIRES COMPENSATION | 21 |

| COMPUTING COMPENSATION SIGNALS THAT WILL COMPENSATE FOR THE DISTURBANCE THAT IS TO OCCUR IN THE FUTURE | 22 |

| APPLYING THE COMPENSATION SIGNALS TO THE SPACECRAFT SUBSTANTIALLY AT THE TIME OF THE OCCURRENCE OF THE DISTURBANCE CAUSING THE MOTION THAT REQUIRES COMPENSATION | 23 |

EP 1 059 577 B1